# EUROPÄISCHE PATENTSCHRIFT

(11) **EP 0 831 598 B1**
(45) Veröffentlichungstag und Bekanntmachung des Hinweises auf die Patenterteilung: **26.07.2000**
(21) Anmeldenummer: 96115166.9
(22) Anmeldetag: 20.09.1996
(51) Int. Cl.: H04B 7/10

(54) **Polarisationsdiversity-System für Mobilkommunikation mit adaptiver Gestaltung der Abstrahlungscharakteristik**
Polarization diversity system for mobile communications with adaptive configuration of the radiation characteristics
Système à diversité de polarisation pour communications mobiles avec configuration adaptative des caractéristiques de rayonnement

(43) Veröffentlichungstag der Anmeldung: 25.03.1998
(73) Patentinhaber: SIEMENS AKTIENGESELLSCHAFT, 80333 München (DE)
(72) Erfinder: Färber, Michael, 82515 Wolfratshausen (DE); Weber, Peter, 81373 München (DE); Emmer, Dieter, 82110 Germering (DE); Sokat, Jörg, Dr., 81379 München (DE); Ivanov, Kolio, Dr., 81369 München (DE)

(56) Entgegenhaltungen:
- EP-A- 0 124 319
- WO-A-93/01663

## Beschreibung

Die Erfindung betrifft eine Funkstation für Mobilfunksysteme und ein Verfahren zur Auswahl einer Sendeeinrichtung in einer Funkstation für Mobil-Kommunikationssysteme.

Mobil-Kommunikationssysteme ermöglichen den Aufbau von Kommunikationsverbindungen von und zu mobilen Teilnehmern, indem über eine Funkschnittstelle Informationen übertragen werden. Auf der Funkschnittstelle können verschiedene Verfahren zur Separierung der Teilnehmer eingesetzt werden, dazu gehören beispielsweise das Zeitmultiplex-, das Frequenzmultiplex- oder das Codemultiplexverfahren. Ein bekanntes Mobil-Kommunikationssystem ist beispielsweise das GSM (Global System for Mobil Communication)-Mobilfunksystem.

Im Mobilfunk werden die Informationen auf der Funkschnittstelle mittels elektromagnetischer Wellen übertragen. Aufgrund der Abstrahlung der Welle mittels einer Sendeantenne wird die Welle, bedingt durch die Geometrie und die Anordnung der Sendeantenne, polarisiert. Nach der Übertragung über den die Funkschnittstelle charakterisierenden Mobilfunkkanal wird nur ein Teil der Energie der polarisierten Welle von der Empfangsantenne absorbiert. Die empfangene Energie ist maximal, wenn die Polarisation der empfangenen Welle mit der Polarisation der Empfangsantenne übereinstimmt.

Aufgrund von Beugungen und Reflexionen im Mobilfunkkanal wird die Polarisation der abgestrahlten Welle verändert. Zusätzlich hat der Inklinationswinkel der Empfangsantenne einen entscheidenden Einfluß auf ihre Polarisation. Im Falle eines mobilen Teilnehmers, der ein Handheld benutzt, ist dieser Winkel nicht vorhersehbar und somit rein zufällig. Durch diese Faktoren werden im allgemeinen die Polarisation der Welle und die Polarisation der Empfangsantenne nicht übereinstimmen und der mobile Empfänger wird in der Regel lediglich einen Teil der maximal verfügbaren Energie der elektromagnetischen Welle absorbieren können.

Aus WO 93 01 663 A und EP 0 124 319 A ist es bekannt, Gruppenantennen bzw. Polarisationsdiversität zur Verbesserung des Empfanges in einer Empfangsstation einzusetzen. Beispielswiese zwei oder mehr Antennen unterschiedlicher Polarisation versorgen eine Empfangsstation mit Empfangssignalen, die durch unterschiedliche Polarisation zumindest teilweise dekorreliert sind. Die Empfangsstation kann daraufhin eine Auswahl aus den Empfangssignalen treffen. Bei einer derartigen Empfangsstation bleibt jedoch unbeachtet, daß auch für die Kommunikationsverbindung von einer Basisstation zu einer Mobilstation vergleichbare Probleme auftreten, jedoch eine Polarisationsdiversität in der Mobilstation durch die beengten Konstruktionsmöglichkeiten schwer durchzuführen ist.

Der Erfindung liegt daher die Aufgabe zugrunde, eine Funkstation und ein Verfahren anzugeben, mit denen die Kommunikation zwischen einer Basisstation und einer Mobilstation in einem Mobil-Kommunikationssystem weiter verbessert werden kann. Diese Aufgabe wird durch die Funkstation nach den Merkmalen des Patentanspruchs 1 und das Verfahren nach den Merkmalen des Patentanspruchs 8 gelöst. Vorteilhafte Weiterbildungen sind den Unteransprüchen zu entnehmen.

Eine erfindungsgemäße Funkstation für Mobil-KommunikationsSYSteme umfaßt mindestens zwei Antenneneinheiten unterschiedlicher Polarisation, die jeweils mit einem Duplexer zum Separieren von Sende- und Empfangszweig verbunden sind. Diese Duplexer sind jeweils mit einer Kanaltrennungseinheit für jeden Empfangszweig und einer Kanalzusammenführungseinheit für jeden Sendezweig verbunden. Weiterhin umfaßt die Funkstation eine Steuereinheit zum sendezweigbezogenen Steuern von Sendesignalen auf eine oder mehrere Antenneneinheiten entsprechend einer Gewichtung, die mit den Empfangssignalen der Empfangszweige, beispielsweise entsprechend ihrer Signalpegel, korreliert.

Der Funkstation ist es somit möglich, durch Auswertung der Empfangssignale mehrerer Antenneneinheiten unterschiedlicher Polarisation die Polarisation der einfallenden Welle zu schätzen. Anhand der Schätzwerte kann die Steuereinheit die Sendesignale auf eine oder mehrere Antenneneinheiten derart steuern, daß die Polarisationsrichtung der abgestrahlten Welle für die gleiche Kommunikationsverbindung weitgehend mit der der einfallenden Welle übereinstimmt. Da üblicherweise bei allen Funkstationen eines Mobil-Kommunikationssystemes die Antenneneinheiten sowohl zum Senden als auch zum Empfangen genutzt werden, wird die abgestrahlte Welle der Sendesignale auf die bevorzugte Empfangsrichtung der empfangenden Funkstation eingestellt.

Vorzugsweise ist die Funkstation eine Basisstation in Mobilfunknetzen, deren Abstrahlungcharakteristik in bezug auf die Polarisation sich somit adaptiv auf die Vorzugspolarisationsrichtung der Mobilstationen einstellen kann. Die sendende Funkstation kann somit die abgestrahlte Welle so polarisieren, daß sie am Empfänger koplanar zur Empfangsantenne anliegt. Weiterhin kann die Funkstation die Polarisation der abzustrahlenden Welle auch entsprechend der zeitlichen Änderung der Polarisation aufgrund einer Bewegung der Mobilstation adaptiv regeln.

Prinzipiell ist es möglich, bei der Zuordnung eines Teilnehmers zu einer gewünschten Polarisation entweder die Verbindung zwischen einer Antenneneinheit und einer Empfangseinheit oder die Verbindung zwischen einer Empfangseinheit und der Signalverarbeitungstrecke für den entsprechenden Teilnehmer schaltbar zu gestalten. Im ersten Fall erfolgt damit die Zuordnung von einer Sendeeinheit zur Antenneneinheit adaptiv, währenddessen im zweiten Fall die Sendeeinheit fest mit der Antenneneinheit verbunden ist und die Zuordnung vom Teilnehmer zur Sendeeinheit adaptiv erfolgt.

Besonders vorteilhaft kann die Polarisationsrichtung der abgestrahlten Welle gestaltet werden, wenn die Sendesignale zweier Antenneneinheiten zueinander kreuzpolarisiert sind. Damit ergeben sich vereinfachte Berechnungsgrundlagen und ein Einstellen beliebiger Polarisationsrichtungen ist möglich. Es ist zweckmäßig, lineare oder gegenläufig zirkulare Polarisationen für die einzelnen Antenneneinheiten auszuwählen.

Entsprechend einer weiteren vorteilhaften Ausgestaltung der Funkstation umfaßt diese eine Einrichtung zur Pegelmessung für die zumindest zwei durch die Antenneneinheiten empfangenen Empfangssignale und eine Einrichtung zum Bestimmen der Polarisationsrichtung der Empfangssignale aus der Pegelmessung.

Weiterhin ist die Steuereinheit derart ausgebildet, daß die Sendesignale für die zumindest zwei Sendezweige entsprechend der Polarisation der einfallenden Welle der Empfangssignale gewichtet werden. Dies bedeutet, daß anhand des Pegels von z.B. zwei zueinander kreuzpolaren Empfangssignalen die genaue Polarisationsrichtung der einfallenden Welle bestimmt werden kann. Die Steuereinheit kann daraufhin für den Sendefall die Polarisationsrichtung der abgestrahlten Welle so einstellen, daß diese genau der einfallenden Welle entspricht. Ist beispielsweise der Pegel im Empfangspfad mit vertikaler Polarisation doppelt so groß wie der mit horizontaler Polarisation, so stellt die Steuereinrichtung die Sendezweige so ein, daß ebenso im Sendezweig mit vertikaler Polarisation doppelt so viel Energie abgestrahlt wird wie im Sendezweig mit horizontaler Polarisation.

Entsprechend einer alternativen Weiterbildung der Erfindung umfaßt die Funkstation eine Einrichtung zum Bestimmen von Gütekriterien für die Empfangssignale der Empfangspfade unterschiedlicher Polarisation und eine Einrichtung zur Auswahl eines Empfangspfades anhand von Gütekriterien. Somit ist es der Funkstation möglich, nicht nur anhand des Pegels sondern anhand von alternativen Bewertungskriterien, wie z.B. dem Signal/Rauschverhältnis oder dem Verhältnis von Trägersignal zu Störsignal oder der Bitfehlerrate, Aussagen über die Polarisation der einfallenden Welle der Empfangssignale zu treffen.

Die Steuereinheit ist dabei derart ausgebildet, daß die Sendesignale auf die anhand der Gütekriterien ausgewählte Antenneneinheit geschaltet werden oder, daß eine Übergabe des Sendepfades zu einer Sendeeinrichtung vorgenommen wird, die mit der ein entsprechend den Gütekriterien besseres Empfangssignal empfangenden Antenneneinheit korrespondiert. Damit wird entweder die Verbindung von einer Sendeeinrichtung zur Antenneneinheit, oder die Verbindung von einer Sendeeinrichtung zum entsprechenden Teilnehmerkanal geschalten.

Die Auswahl einer Sendeeinrichtung entspricht einer Übergabeprozedur, wie sie im GSM-Mobilfunksystem bei einem Frequenzwechsel bekannt ist. Die Sendesignale einer Sendeeinrichtung werden auf eine fest zugeordnete Antenneneinrichtung geführt. Aus den Empfangssignalen verschiedener Empfangszweige werden über eine Meßperiode Gütemeßwerte ermittelt und miteinander verglichen. Gemäß dem erfindungsgemäßen Verfahren erfolgt eine Übergabe zu dem mit dem besseren Empfangszweig korrespondierenden Sendezweig, falls der Gütemeßwert dieses Empfangszweiges über dem des mit dem bisher ausgewählten Sendezweig korrespondierenden Empfangszweig liegt. Damit wird regelmäßig die Sendeeinrichtung ausgewählt, die mit der Antenneneinheit verbunden ist, über die die dem Empfangssignal am nächsten kommende Polarisationsrichtung eingestellt werden kann.

Gemäß vorteilhafter Weiterbildungen dieses Verfahrens entsprechen die Gütemeßwerte Pegelmeßwerten, die besonders leicht aus den Empfangssignalen zu gewinnen sind. Vorteilhafterweise wird die Übergabeprozedur nur dann angeregt, wenn die Differenz der Pegelmeßwerte über einen vorgebbaren Grenzwert (Schwellwert) liegt, um ein allzu häufiges Umschalten zu vermeiden.

Entsprechend einer weiteren Ausgestaltung des erfindungsgemäßen Verfahrens wird die Übergabeprozedur nur dann angeregt, wenn zu mehreren nacheinander folgenden Zeitpunkten anhand der Pegelmeßwerte eine Übergabeprozedur angefordert wird. Nach erfolgter Übergabe kann eine nochmalige Übergabe für eine vorgebbare Zeitspanne gesperrt werden. Auch durch diese Maßnahme wird verhindert, daß bei zwei in etwa gleichen Empfangspfaden eine ständige Übergabe mit hohem Verbrauch an Systemressourcen erfolgt.

Im folgenden soll die Erfindung anhand von Ausführungsbeispielen unter Bezugnahme auf die Figuren näher erläutert werden.

Dabei zeigen:
- Figur 1: ein Mobil-Kommunikationssystem,
- Figur 2: eine Funkstation mit adaptiver Nachführung der Polarisationsrichtung der Sendesignale,
- Figur 3: eine Funkstation mit adaptiver Auswahl einer Antenneneinheit entsprechend der Polarisationsrichtung der Empfangssignale,
- Figur 4: eine Funkstation mit adaptiver Auswahl einer fest mit einer Antenneneinheit verbundenen Sendeeinrichtung durch einen Übergabeprozess, und
- Figur 5: ein Ablaufdiagramm des Übergabeprozesses der Funkstation nach Figur 4.

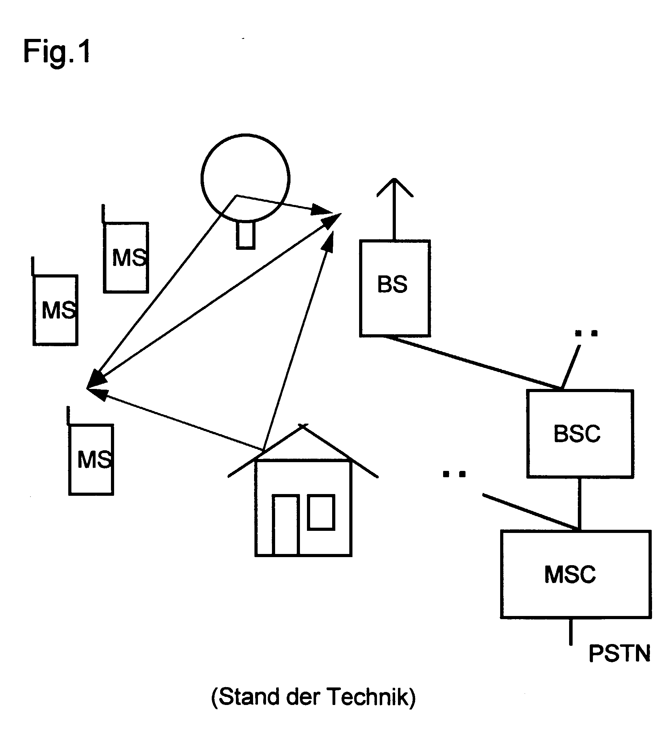

Das in Figur 1 dargestellte Mobil-Kommunikationssystem ist ein bekanntes GSM-Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationskontroller BSC ermöglicht wiederum eine Verbindung zu zumindest einer Basisstation BS, in dem er die Basisstation BS und die Verbindung zu dieser Basisstation BS steuert.

Eine solche Basisstation BS ist eine Funkstation, die über eine Funkschnittstelle eine Nachrichtenverbindung zu Mobilstationen aufbauen kann. In Figur 1 ist beispielsweise eine solche Funkverbindung zu einer Mobilstation MS dargestellt. Die Funkschnittstelle zwischen Basisstation BS und Mobilstation MS ist nach dem Zeitmultiplexverfahren organisiert, es könnte jedoch auch zusätzlich nach dem Frequenzmultiplexverfahren oder einem weiteren Verfahren organisiert sein. Auf einer Trägerfrequenz werden so beispielsweise 8 Zeitlagen bereitgestellt, die für verschiedene Kommunikationsverbindungen und zur Organisation der Funkschnittstelle genutzt werden können.

Die Kommunikationsverbindung zwischen einer Basisstation BS und einer Mobilstation MS unterliegt einer Mehrwegeausbreitung, die durch Reflexionen und Beugungen, beispielsweise an Gebäuden oder Bepflanzungen, zusätzlich zum direkten Ausbreitungsweg hervorgerufen werden. Geht man von einer Bewegung der Mobilstation MS aus, dann ist der Einfluß der Reflexionen, Beugungen und zusätzlichen Störungen zeitabhängig.

Betrachtet man nun exemplarisch die Nachrichtenübertragung von einer Mobilstation MS zu einer Basisstation BS, dann treffen die verschiedenen Signalkomponenten zeitveränderlich bei der empfangenden Basisstation BS ein und überlagern sich dort. Dabei kann es zu Auslöschungserscheinungen kommen, die die Kommunikationsverbindung beeinträchtigen. Die Überlagerung der verschiedenen Signalkomponenten bringt es auch mit sich, daß sich die Polarisationsrichtung der Empfangssignale zeitabhängig ändert.

Die nachfolgend geschilderte Funkstation, eine beispielhafte Basisstation BS, wertet die Polarisationsrichtung der Empfangssignale aus, und gewinnt daraus Aussagen über die Gestaltung der Polarisationsrichtung der abgestrahlten Sendesignale, die im sogenannten Down-Link von der Basisstation BS zur Mobilstation MS übertragen werden sollen.

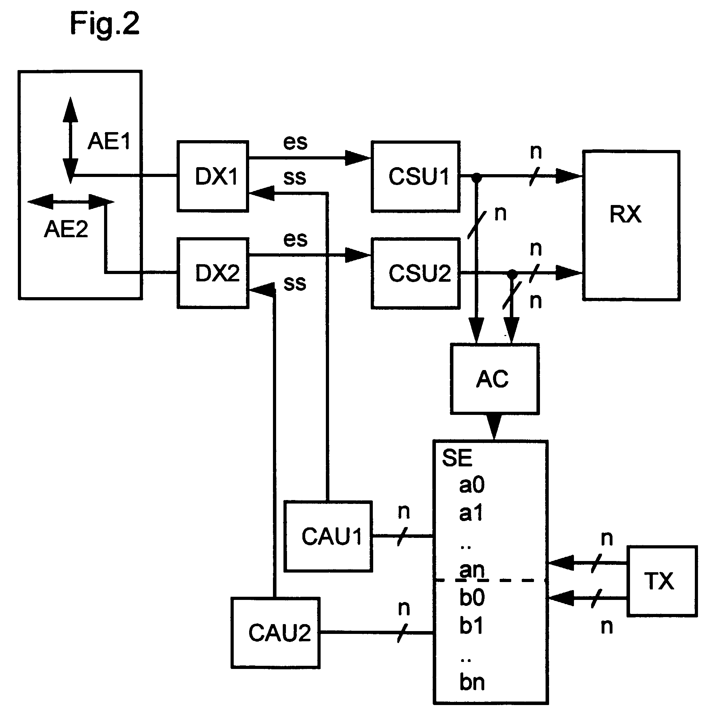

Die für die Erfindung beispielhaften Funkstationen der Figuren 2 bis 4 modifizieren bekannte Basisstationen, beispielsweise für ein GSM-Mobilfunksystem. Es werden im folgenden nur die Baugruppen geschildert, die entsprechend der Erfindung Funktionen zum Nachführen der Polarisationsrichtung der Sendesignale innerhalb der Funkstation haben.

Eine Funkstation nach Figur 2 hat zwei Antenneneinheiten AE1 und AE2, die jeweils linear und zueinander kreuzpolarisiert sind. Bei den Antenneneinheiten AE1 und AE2 handelt es sich um Sende- und Empfangsantennen, die jeweils mit einem Duplexer DX1 und DX2 verbunden sind. Diese Duplexer DX1 und DX2 führen eine Trennung in Sende- und Empfangspfade durch.

Pro Empfangszweig enthält die Funkstation eine Kanaltrennungseinheit (Channel Separation Unit) CSU1, CSU2 und pro Sendezweig eine Kanalzusammenführungseinheit (Channel Aggregation Unit) CAU1, CAU2. Die Kanaltrennungseinheiten CSU1, CSU2 nehmen entsprechend die Empfangssignale es auf. Beispielsweise verarbeitet die erste Kanaltrennungseinheit CSU1, die mit der kopolar polarisierten, ersten Antenneneinheit AE1 verbunden ist, die kopolar polarisierten Empfangssignale es. Entsprechend verarbeitet die zweite Kanaltrennungseinheit CSU2 die kreuzpolar polarisierten Empfangssignale es.

In den Kanaltrennungseinheiten werden die Kanäle teilnehmerbezogen separiert. Im GSM-Mobilfunksystem durchlaufen die empfangenen Signale zunächst ein Bandfilter, das auf das GSM-Frequenzband abgestimmt ist, bevor ein Splitter das GSM-Empfangsspektrum in die einzelnen schmalbandigen FDMA-Kanäle unterteilt (FDMA = Frequency Division Multiple Access). Jeder FDMA-Kanal ist gemäß der GSM-Spezifikation in acht TDMA-Kanäle (Zeitschlitze) unterteilt, entsprechend einem TDMA (Time Division Multiple Access). Jeder Teilnehmerkanal ist damit durch eine Trägerfrequenz und einen Zeitschlitz charakterisiert und wird durch die Kanaltrennungseinheiten CSU1 bzw. CSU2 separiert und einer Empfangseinrichtung RX zugeführt.

Nach der Kanaltrennung werden in einer Einrichtung zur Pegelmessung AC (Adaption Controll) die in den beiden Empfangszweigen empfangenen Pegel des Signals gemessen. Aufgrund dieser Information, kann die Polarisationsrichtung der empfangenen Welle bestimmt werden. Sie berechnet sich aus einer vektoriellen Addition der beiden mit den Empfangspegeln gewichteten orthogonalen Polarisationsrichtungen.

Es soll nun mit dieser Polarisation gesendet werden, wozu die Sendesignale ss in zwei gewichteten Pfaden über die dual polarisierte Antenne (Antenneneinheiten AE1, AE2) abgestrahlt werden. Die Polarisationsrichtung der abgestrahlten Sendesignale ss kann durch die Gewichte a0..an und b0..bn repräsentiert werden, die in einer Einrichtung AC zum Bestimmen der Polarisationsrichtung bestimmt werden. Dazu werden die Gewichte a0..an und b0..bn durch eine Steuereinheit SE so eingestellt, daß die vektorielle Addition beider durch die Antenneneinheiten AE1 und AE2 abgestrahlten Sendesignale ss die gewünschte Polarisationsrichtung in Senderichtung ergeben.

Die Steuereinrichtung SE ist mit der Einrichtung zur Pegelmessung bzw. zur Bestimmung der Polarisationsrichtung AC, der Sendeeinrichtung TX und den Kanalzusammenführungseinheiten (Channel Aggregation Units) CAU1, CAU2 verbunden. In der Steuereinheit SE werden die durch die Sendeeinrichtung TX erzeugten Sendesignale ss wie geschildert mit a0..an bzw. b0..bn gewichtet und den Kanalzusammenführungseinheiten CAU1 und CAU2 zugeführt. Die Beeinflussung der Sendesignale ss muß dabei teilnehmerbezogen erfolgen, da die Einstellung der Polarisationsrichtung für jeden Teilnehmer, d.h. für jede Kommunikationsverbindung, individuell vorgenommen wird.

In den Kanalzusammenführungseinheiten CAU1, CAU2 werden daraufhin die Zeitlagen (Zeitschlitze) der einzelnen Kommunikationsverbindungen blockweise aneinandergereiht und bei mehreren Trägerfrequenzen das komplette Frequenzband der Übertragung generiert.

Die Funktionsweise der Kanaltrennungseinheiten CSU1, CSU2 und der Kanalzusammenführungseinheiten CAU1, CAU2 wurde hier anhand des GSM-Mobilfunksystemes erläutert, werden jedoch andere Übertragungsverfahren auf der Funkschnittstelle verwendet, dann sind diese Einheiten entsprechend des gewählten Übertragungsverfahrens ausgestaltet.

Die für Figur 2 beschriebene Auswertung der Empfangssignale es und die Gewichtung der Sendesignale ss geht davon aus, daß die beiden kreuzpolar zueinander stehenden Polarisationen linear sind. Es ist jedoch ebenso möglich, daß die Adaption der Polarisation auch mit zwei gegenläufigen zirkularen Polarisationen erfolgt. Die Adaption erfolgt in diesem Fall mit einer unterschiedlichen Phasenansteuerung beider Antenneneinheiten. Es können alternativ auch weitere elektronische Verfahren zum Einstellen der Polarisationsrichtung eingesetzt werden.

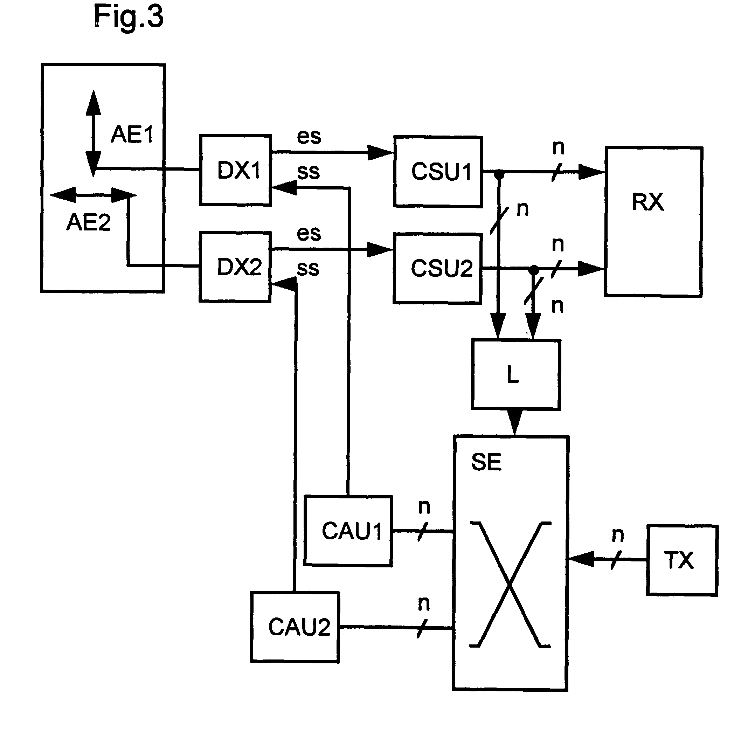

Eine Funkstation nach Figur 3 weist im Vergleich zur Funkstation nach Figur 2 einige Modifikationen auf. Bei dieser beispielhaften erfindungsgemäßen Funkstation findet keine Gewichtung der Sendesignale ss statt, sondern es erfolgt eine Auswahl eines Sendezweiges zum Beispiel mit Hilfe einer Schaltmatrix.

Im Empfangszweig wird mit einer Einrichtung L zum Bestimmen von Gütekriterien für die Empfangssignale es eine Aussage über die Güte der Empfangssignale es mit unterschiedlicher Polarisation gewonnen. Ein Gütekriterium kann dabei anhand der Bitfehlerrate, des Signalpegels, des Signal/Rauschverhältnisses oder des Verhältnisses von Trägersignal zu Störsignal definiert werden. Es kann auch durch Kombination dieser Kennwerte erfolgen.

Anhand der Gütekriterien erfolgt in der Einrichtung L die Auswahl eines Empfangspfades. Durch die Auswahl wird festgestellt, welche Vorzugs-Polarisationsrichtung das Empfangssignal es aufweist, also welche Polarisationsrichtung vorzugsweise auch für den Sendefall verwendet werden soll. In einer Steuereinheit SE, die beispielsweise als Schaltmatrix ausgestaltet ist, werden die in der Sendeeinrichtung TX erzeugten Sendesignale ss auf den Sendepfad mit der ausgewählten Antennenheit AE1 oder AE2 geschalten. Es kann auch eine Mehrzahl von Antennenheiten eingesetzt werden.

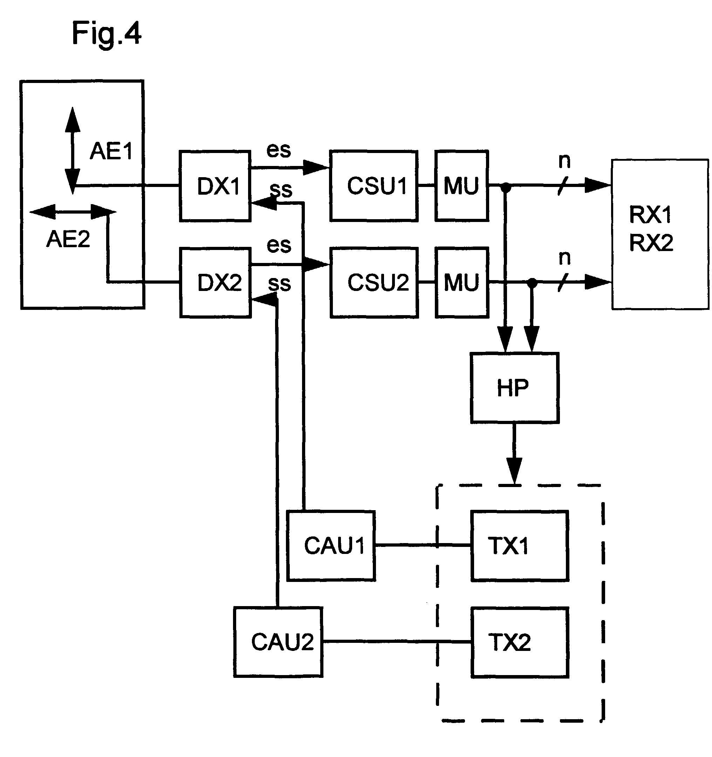

Bei der Funkstation nach Figur 4 erfolgt die Auswahl eines Sendepfades im Gegensatz zur Funkstation nach Figur 3 auf eine modifizierte Art und Weise, da bei dieser Funkstation Sendeeinrichtungen TX1 und TX2 jeweils fest mit einem Sendepfad verbunden sind. Für jeden Empfangspfad wird mit einer Einrichtung Measuring Unit) MU zum Bestimmen von Gütekriterien eine Aussage über die Qualität der Empfangssignale es unterschiedlicher Polarisation gewonnen.

In dieser Einrichtung MU, beispielsweise einer Meßeinheit, werden für einen Übergabeprozeß (Handover Procedure) geeignete Signalparameter, z.B. der Pegel oder die Qualität der Empfangssignale es, für jeden Empfangszweig teilnehmerbezogen extrahiert.

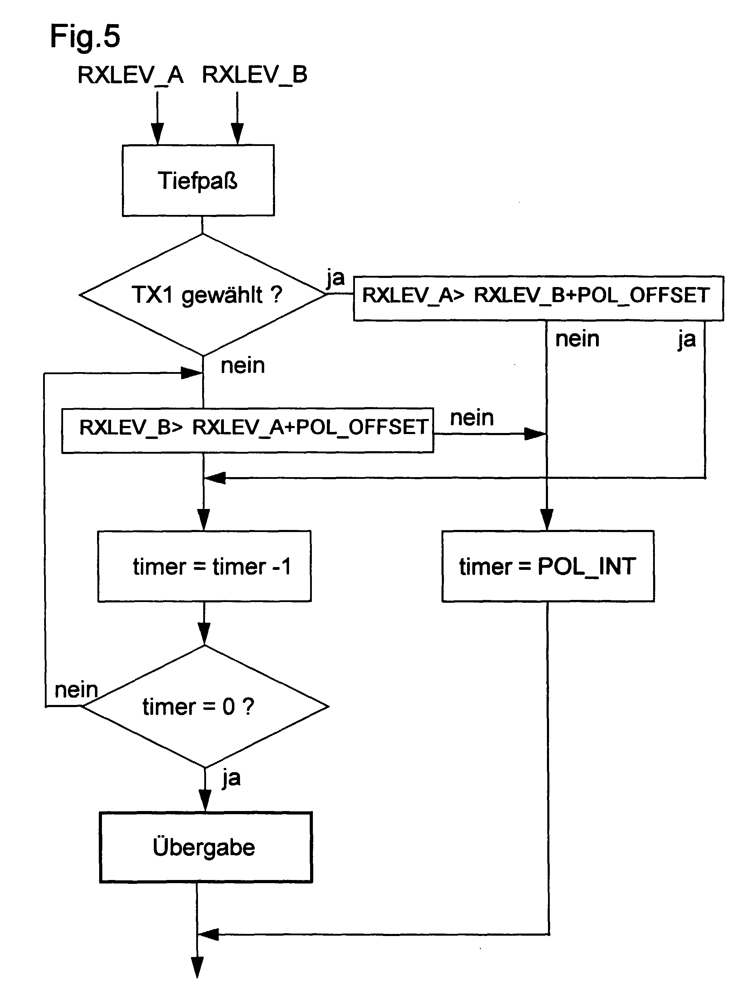

Die Funkstation umfaßt weiterhin eine Einrichtung HP zur Auswahl eines Empfangspfades anhand der Gütekriterien. Diese Einrichtung HP regt eine Übergabeprozedur an, nach der eine Sendeeinrichtung TX1, TX2 ausgewählt wird, die mit der Antenneneinheit AE1, AE2 verbunden ist, die entsprechend der Gütekriterien das bessere Empfangssignal es empfängt. Die Übergabeprozedur (Handover) wird mit Hilfe des Ablaufplanes nach Figur 5 erläutert.

In der Meßeinheit MU werden als geeignete Signalparameter für die Gütekriterien über eine SACCH-Meßperiode (480 ms) in der Basisstation ermittelte Meßwerte RXLEV_A und RXLEV_B des Empfangspegels in den entsprechenden Empfangszweigen unterschiedlicher Polarisation erzeugt. Diese Meßwerte RXLEV_A und RXLEV_B werden zunächst einer geeigneten Tiefpaßfilterung unterzogen, bevor sie dem Handover-Entscheidungsprozeß zugeführt werden.

Nimmt man an, daß die bestehende Kommunikationsverbindung über eine Sendeeinrichtung TX1 versorgt wird und wird durch den Vergleich der gefilterten Meßwerte der Empfangspegel RXLEV_A und RXLEV_B festgestellt, daß der Meßwert RXLEV_B des zweiten Empfangspfades den Meßwert RXLEV_A des ersten Empfangspfades um einen Grenzwert POL_OFFSET überschreitet, so wird im Handover-Entscheidungsprozeß ein Timer mit dem Anfangswert POL_INT gestartet. Der Timer bzw. das zu überwachende Zeitintervall POL_INT sollte größer oder gleich einer SACCH-Meßperiode sein. Um unnnötige Übergaben zu vermeiden, sollte das zu überwachende Zeitintervall jedoch einige Sekunden betragen.

Während des Ablaufens des Timers bzw. während des beliebigen, aber festen Zeitintervalls POL_INT wird auf der Basis der im Handover-Entscheidungsprozeß einlaufenden Meßdaten RXLEV_A und RXLEV_B ermittelt, ob im zweiten Empfangspfad immer noch signifikant besser empfangen wird als im ersten Empfangspfad. Wird im Handover-Entscheidungsprozeß festgestellt, daß nach Ablauf des Timers bzw. nach dem Zeitintervall POL_INT der zweite Empfangspfad immer noch signifikant besser ist als der erste Empfangspfad, dann wird ein Handover für die betreffende Mobilstation MS von der ersten Sendeeinrichtung TX1 zur zweiten Sendeeinrichtung TX2 in derselben Basisstation BS angefordert.

Wird dagegen im Handover Entscheidungsprozeß festgestellt, daß nach Ablauf des Timers der zweite Empfangspfad nicht mehr signifikant besser ist als der erste, so wird kein Handover für die betreffende Mobilstation MS angefordert.

Wird vor Ablaufen des Timers auf der Basis der Meßdaten RXLEV_A und RXLEV_B ermittelt, daß der zweite Empfangspfad nicht signifikant besser ist als der erste, so wird der Timer zurückgesetzt. Der Timer wird wieder gestartet, wenn im Handover Entscheidungsprozeß erkannt wird, daß die Mobilstation MS wieder im zweiten Empfangspfad signifikant besser als im ersten Empfangspfad empfangen wird. In analoger Weise wird die Handover Entscheidungsprozedur abgearbeitet, wenn die Mobilstation MS durch die zweite Sendeeinrichtung TX2 bedient wird.

Zwecks Unterdrückung von Zufallseinflüssen bzw. zur Stabilisierung des Handover-Entscheidungsprozesses kann zusätzlich zu dem in Figur 5 dargestellten Übergabeprozeß zwischen dem Rücksetzen des Timers und dem Wiederstarten des Timers individuell für jede Kommunikationsverbindung ein Überwachungstimer eingeführt werden. Dieser wird beim Zurücksetzen des Timers gestartet und erst nach Ablauf dieses Überwachungstimers darf der Timer gestartet werden, falls die Startbedingungen erfüllt sind.

Der Timer und der Überwachungstimer können auch als Zähler implementiert werden. Beide werden für jede Kommunikationsverbindung individuell verwaltet. Die Anfangswerte der Timer können für jeden Sende- bzw. Empfangszweig individuell eingestellt werden oder für alle Zweige mit den gleichen Werten belegt werden. Die Timer bzw. die Überwachungstimer können beispielsweise durch eine von der Basisstation abgesetzte Einheit, z.B. ein Überwachungs- und Wartungszentrum (Operating and Maintining Center) mit Anfangswerten belegt werden.

## Patentansprüche

1. Funkstation für Mobil-Kommunikationssysteme
- mit mindestens zwei Antenneneinheiten (AE1, AE2) unterschiedlicher Polarisation, die mit je einem Duplexer (DX1, DX2) zum Separieren von Sende- und Empfangszweig verbunden sind,
- mit einer mit einem Duplexer (DX1, DX2) verbundenen Kanaltrennungseinheit (CSU1, CSU2) für jeden Empfangszweig,
- mit einer mit einem Duplexer (DX1, DX2) verbundenen Kanalzusammenführungseinheit (CAU1, CAU2) für jeden Sendezweig,
- mit einer Steuereinheit (SE) zum sendezweigbezogenen Steuern von Sendesignalen (ss) auf eine oder mehrere Antenneneinheiten (AE1, AE2) entsprechend einer Gewichtung, die mit Empfangssignalen (es) der Empfangszweige korreliert.

2. Funkstation nach Anspruch 1,
bei der die Sendesignale (ss) zweier Antenneneinheiten (AE1, AE2) zueinander kreuzpolarisiert sind.

3. Funkstation nach Anspruch 2,
bei der die Polarisationen linear oder gegenläufig zirkular sind.

4. Funkstation nach einem der vorhergehenden Ansprüche,
mit einer Einrichtung zur Pegelmeßung (AC) für die zumindest zwei durch die Antenneneinheiten (AE1, AE2) empfangenen Empfangssignale (es),
mit einer Einrichung (AC) zum Bestimmen der Polarisationsrichtung der Empfangssignale (es) aus der Pegelmeßung,
wobei die Steuereinheit (SE) ausgebildet ist, um die Sendesignale (ss) für die zumindest zwei Sendezweige entsprechend der Polarisation einer einfallenden Welle der Empfangssignale (es) zu gewichten.

5. Funkstation nach einem der Ansprüche 1 bis 3,
mit einer Einrichtung (L) zum Bestimmen von Gütekriterien für die Empfangssignale (es) der Empfangspfade unterschiedlicher Polarisation der Antenneneinheiten (AE1, AE2),
mit einer Einrichtung (L) zur Auswahl eines Empfangspfades anhand der Gütekriterien,
wobei die Steuereinheit (SE) ausgebildet ist, um die Sendesignale (ss) auf die ausgewählte Antenneneinheit (AE1, AE2) zu schalten.

6. Funkstation nach einem der Ansprüche 1 bis 3,
mit einer Einrichtung (MU) zum Bestimmen von Gütekriterien für die Empfangssignale (es) der Empfangspfade unterschiedlicher Polarisation der Antenneneinheiten (AE1, AE2),
mit einer Einrichtung (HP) zur Auswahl eines Empfangspfades anhand der Gütekriterien,
wobei die Steuereinheit (SE) ausgebildet ist, um Übergabe des Sendepfades zu einer mit einer Antenneneinheit (AE1, AE2) verbundenen Sendeeinrichtung (TX1, TX2) vorzunehmen, die mit der ein entsprechend den Gütekriterien besseres Empfangssignal (es) empfangenden Antenneneinheit (AE1, AE2) verbunden ist.

7. Funkstation nach Anspruch 5 oder 6,
bei der das Gütekriterium anhand der Bitfehlerrate, des Signalpegels, des Signal/Rauschverhältnisses und/oder des Verhältnisses von Trägersignal zu Störsignal definiert wird.

8. Verfahren zur Auswahl einer Sendeeinrichtung (TX1, TX2) in einer Funkstation nach den Ansprüchen 6 oder 7, bei dem
- die Sendesignale (ss) einer Sendeeinrichtung (TX1, TX2) auf eine fest zugeordnete Antenneneinrichtung (AE1, AE2) geführt werden,
- aus den Empfangssignalen (es) verschiedener Empfangszweige über eine Meßperiode Gütemeßwerte ermittelt werden,
- die Gütemeßwerte der Empfangszweige verglichen werden,
- eine Übergabe zu dem mit dem besseren Empfangszweig korrespondierenden Sendezweig durchgeführt wird, falls der Gütemeßwert dieses Empfangszweiges über dem des mit dem bisher ausgewählten Sendezweig korrespondierenden Empfangszweig liegt.

9. Verfahren nach Anspruch 8,
bei dem die Gütemeßwerte Pegelmeßwerte sind und eine übergabeprozedur angeregt wird, falls die Differenz der Pegelmeßwerte einen vorgebbaren Grenzwertes überschreiten.

10. Verfahren nach einem der Ansprüche 8 oder 9,
bei dem erst bei mehrmaligem Vorliegen eines größeren Pegelmeßwertes im nicht mit dem ausgewählten Sendepfad korrespondierenden Empfangspfad eine Übergabeprozedur angeregt wird.

11. Verfahren nach einem der Ansprüche 8 bis 10,
bei dem nach erfolgter Übergabe eine nochmalige Übergabe für eine vorgebbaren Zeitspanne gesperrt ist.

## Claims

1. Radio station for mobile communications systems
- with at least two antenna units (AE1, AE2) with different polarization which are each connected to a duplexer (DX1, DX2) for separating the transmit paths and receive path,
- having a channel separating unit (CSU1, CSU2) for each receive path, said channel separation units (CSU1, CSU2) being connected to a duplexer (DX1, DX2),
- having a channel aggregation unit (CAU1, CAU2) for each transmit path, said channel aggregation units (CAU1, CAU2) being connected to a duplexer (DX1, DX2),
- having a control unit (SE) for directing, with respect to the transmit path, transmit signals (ss) to one or more antenna units (AE1, AE2) in accordance with a weighting which correlates to receive signals (ES) of the receive paths.

2. Radio station according to Claim 1, in which the transmit signals (ss) of two antenna units (AE1, AE2) are cross-polarized with respect to one another.

3. Radio station according to Claim 2, in which the polarizations are linear or circular in opposite directions.

4. Radio station according to one of the preceding claims, having a device for level measurement (AC) for the at least two receive signals (es) received by the antenna units (AE1, AE2),
having a device (AC) for determining the direction of polarization of the receive signals (es) from the level measurement, the control unit (SE) being designed in order to weight the transmit signals (ss) for the at least two transmit paths in accordance with the polarization of an incident wave of the receive signals (es).

5. Radio station according to one of Claims 1 to 3,
having a device (L) for determining quality criteria for the receive signals (es) of the receive paths with different polarization of the antenna units (AE1, AE2),
having a device (L) for selecting a receive path with reference to the quality criteria,
the control unit (SE) being designed to switch the transmit signals (ss) to the selected antenna unit (AE1, AE2).

6. Radio station according to one of Claims 1 to 3, having a device (MU) for determining quality criteria for the receive signals (es) of the receive paths with different polarization of the antenna units (AE1, AE),
having a device (HP) for selecting a receive path with reference to the quality criteria,
the control unit (SE) being designed to perform a handover of the transmit path to a transmitter device (TX1, TX2) which is connected to an antenna unit (AE1, AE2) and which is connected to the antenna unit (AE1, AE2) which receives a receive signal (es) which is better according to the quality criteria.

7. Radio station according to Claim 5 or 6, in which the quality criterion is defined with reference to the bit error rate, the signal level, the signal-to-noise ratio and/or the ratio of carrier signal to interference signal.

8. Method for selecting a transmitter device (TX1, TX2) in a radio station according to Claims 6 or 7, in which
- the transmit signals (ss) of one transmitter device (TX1, TX2) are conducted to a permanently assigned antenna device (AE1, AE2),
- the quality measurement values are determined from the receive signals (ES) of different receive paths over a measurement period,
- the quality measurement values of the receive paths are compared,
- a handover to the transmit path which corresponds to the better receive path is carried out if the quality measurement value of this receive path is higher than that of the receive path corresponding to the transmit path which has been selected hitherto.

9. Method according to Claim 8, in which the quality measurement values are level measurement values, and a handover procedure is initiated if the difference between the level measurement values exceeds a predefinable limiting value.

10. Method according to one of Claims 8 or 9, in which a handover procedure is not initiated until a relatively high level measurement value occurs repeatedly in the receive path which does not correspond to the selected transmit path.

11. Method according to one of Claims 8 to 10, in which, after a handover has taken place, a further handover is disabled for a predefinable time period.

## Revendications

1. Station radio pour des systèmes de radiocommunication mobile, comportant
- au moins deux unités antennes (AE1, AE2) de polarisations différentes et reliées chacune à un duplexeur (DX1, DX2) pour la séparation de la branche de réception et de la branche d'émission,
- une unité de séparation de canal (CSU1, CSU2), reliée à un duplexeur (DX1, DX2), pour chaque branche de réception,
- une unité de réunion de canaux (CAU1, CAU2), reliée à un duplexeur (DX1, DX2), pour chaque branche d'émission,
- une unité de commande (SE) pour la commande, rapportée à la branche d'émission, de signaux émis (ss) sur une ou plusieurs unités antennes (AE1, AE2) selon une pondération qui est corrélée avec des signaux reçus (es) des branches de réception.

2. Station radio selon la revendication 1,
dans laquelle les signaux émis (ss) de deux unités antennes (AE1, AE2) sont à polarisation croisée l'un par rapport à l'autre.

3. Station radio selon la revendication 2,
dans laquelle les polarisations sont linéaires ou circulaires en sens contraire.

4. Station radio selon l'une des revendications précédentes, comportant
un dispositif pour la mesure de niveau (AC) pour les deux ou plus signaux (es) reçus par les unités antennes (AE1, AE2),
un dispositif (AC) pour la détermination de la direction de polarisation des signaux reçus (es) à partir de la mesure de niveau,
l'unité de commande (SE) étant conçue pour pondérer les signaux émis (ss) pour les deux ou plusieurs branches d'émission selon la polarisation d'une onde incidente des signaux reçus (es).

5. Station radio selon l'une des revendications 1 à 3, comportant
un dispositif (L) pour la détermination de critères de qualité pour les signaux reçus (es) des voies de réception de polarisations différentes des unités antennes (AE1, AE2),
un dispositif (L) pour la sélection d'une voie de réception à l'aide des critères de qualité,
l'unité de commande (SE) étant conçue pour commuter les signaux émis (ss) sur l'unité antenne (AE1, AE2) sélectionnée.

6. Station radio selon l'une des revendications 1 à 3, comportant
un dispositif (MU) pour la détermination de critères de qualité pour les signaux reçus (es) des voies de réception de polarisations différentes des unités antennes (AE1, AE2),
un dispositif (HP) pour la sélection d'une voie de réception à l'aide des critères de qualité,
l'unité de commande (SE) étant conçue pour effectuer une commutation de la voie d'émission à un dispositif émetteur (TX1, TX2) relié à une unité antenne (AE1, AE2), à savoir au dispositif émetteur qui est relié à l'unité antenne (AE1, AE2) recevant le meilleur signal reçu (es) selon les critères de qualité.

7. Station radio selon la revendication 5 ou 6,
dans laquelle le critère de qualité est défini à l'aide du taux d'erreurs sur les bits, du niveau du signal, du rapport signal/bruit et/ou du rapport du signal porteur au signal parasite.

8. Procédé pour la sélection d'un dispositif émetteur (TX1, TX2) dans une station radio selon les revendications 6 ou 7, dans lequel
- on envoie les signaux émis (ss) d'un dispositif émetteur (TX1, TX2) sur un dispositif antenne (AE1, AE2) associé de manière fixe,
- on détermine des valeurs mesurées de qualité sur une certaine période de mesure à partir des signaux reçus (es) de différentes branches de réception,
- on compare les valeurs mesurées de qualité des branches de réception,
- on effectue une commutation vers la branche d'émission correspondant à la meilleure branche de réception si la valeur mesurée de qualité de cette branche de réception est supérieure à la branche de réception correspondant à la branche d'émission sélectionnée jusqu'alors.

9. Procédé selon la revendication 8,
dans lequel les valeurs mesurées de qualité sont des valeurs mesurées de niveaux et on déclenche une procédure de commutation si la différence des valeurs mesurées de niveaux dépasse une valeur limite pouvant être prescrite.

10. Procédé selon l'une des revendications 8 ou 9,
dans lequel on ne déclenche une procédure de commutation qu'en cas de présences répétées d'une plus grande valeur mesurée de niveau dans la voie de réception ne correspondant pas à la voie d'émission sélectionnée.

11. Procédé selon l'une des revendications 8 à 10,
dans lequel, après une commutation, une nouvelle commutation est bloquée pour un certain intervalle de temps pouvant être prescrit.
